**Europäisches Patentamt**

**European Patent Office**

**Office européen des brevets**

(19)

(11) **EP 1 530 333 A1**

(12) **EUROPEAN PATENT APPLICATION**

(43) Date of publication:
**11.05.2005 Bulletin 2005/19**

(51) Int Cl.[7]: **H04L 25/02**, H04L 1/06,
H04B 7/04

(21) Application number: **03425721.2**

(22) Date of filing: **05.11.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(71) Applicant: **Siemens Mobile Communications S.p.A.**<br>**20126 Milano (IT)**<br><br>(72) Inventors:<br>• **Moretti, Lino**<br>**20128 Milano (IT)** | • **Nicoli, Monica**<br>**24052 Azzano San Paolo (BG) (IT)**<br>• **Spagnolini, Umberto**<br>**20046 Biassono MI (IT)**<br>• **Simeone, Osvaldo**<br>**20145 Milano (IT)**<br><br>(74) Representative: **Giustini, Delio**<br>**Siemens Mobile Communications S.p.A.**<br>**Postfach 22 16 34**<br>**80506 München (DE)** |

(54) **Method for channel estimation in a MIMO OFDM system**

(57) In a digital radio communication system a method is described of estimating multiple channel response at the $N_R$ receiving antennas of a receiver connected to $N_T$ transmitting antennas co-located with the transmitter. As a first step the Least Square channel estimate $(\bar{\mathbf{h}}_{FS,\ell})$ is performed in the frequency domain, by transmitting OFDM modulated pilot symbols univocally associated to the transmitting antennas, and using relevant training pilots stored in the receiver. The LS estimate is noisy due to the cumbersome number of parameters estimated. The method aims to reduce the complexity of the unconstrained LS estimate by exploiting the hidden structure of the multipath time-varying channel including $N_R \times N_T$ individual links. The LS estimate is spatially and temporally weighted to decorrelate noise and interference (whitening) before to be submitted to a modal filtering for reducing the initial complexity. Inverse weighting restores the original correlation of the noise (de-whitening). Modal filtering includes spatial mode identification, temporal mode identification, modal components estimation, and modal synthesis. Modal filtering operates on doubly-spatial temporal domains (figure 6).

**CHANNEL ESTIMATOR**

**FIG. 5**

EP 1 530 333 A1

**Description**

**FIELD OF THE INVENTION**

The present invention is referred to the field of the multicarrier communication systems, and more precisely to a method for the estimation and tracking of channel modes in a multicarrier communication system employing multiple $N_T$ co-located antennas at the transmitter and multiple $N_R$ co-located antennas at the receiver, in order to exploit transmitter and receiver diversity on the radio channel characterized by multiple paths, each described by slowly varying features (angles of departure, angles of arrival, delays, and fading correlation at transmitter and receiver) and a fast varying fading amplitude. The invention can be advantageously employed in the present single-user or multiuser radio communication systems, and also in future generation systems (e.g. 4G PLMNs) in which localized data transmissions assume prevailing importance (e.g. hot-spot).

**BACKGROUND ART**

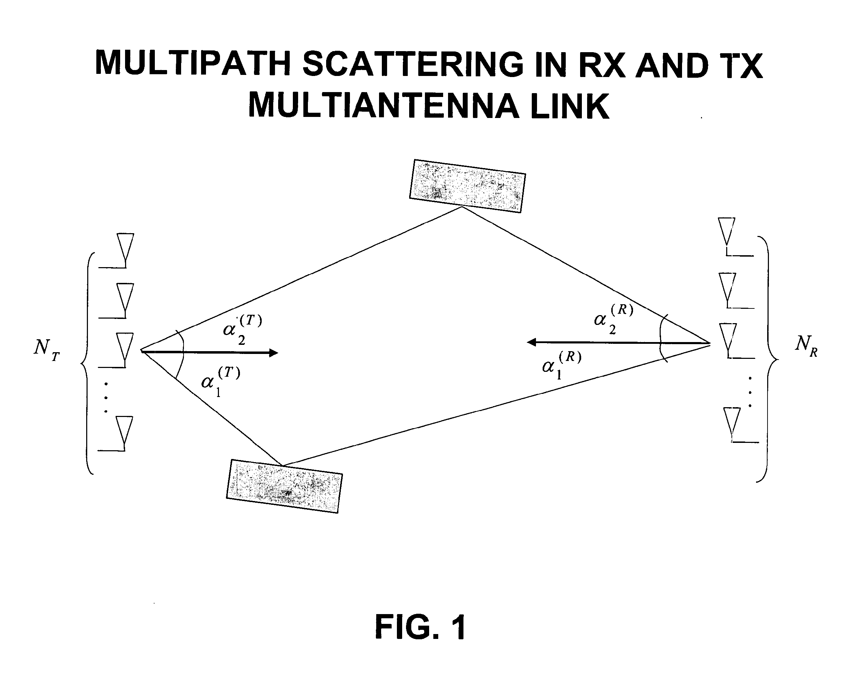

**Fig.1** shows a scattering environment referred to a multiantenna system. The scattering environment is such that there are few rays from the transmitter to the receiver, each characterized by a direction of departure (DOD) $\alpha_d^{(T)}$ and a direction of arrival (DOA) $\alpha_d^{(R)}$. This model is widely used for outdoor scenarios and has been presented for MIMO systems in technical literature. In **fig.1** the transmitted signal is received after having undergone distortion due to the multipath propagation channel which make the channel frequency-selective and call for equalization at the receiver. Convenient implementation and robustness against frequency-selective fading channels are met by Orthogonal frequency division multiplexing (OFDM): a multicarrier modulation promising technique for high rate data transmission on a comb of densely spaced subchannels only subjected to flat fading. OFDM is susceptible to be employed with different schemes, especially for multiuser applications, e.g.: Multicarrier Code Division Multiple Access (MC-CDMA), Direct Sequence CDMA (DS-CDMA), Multitone CDMA (MT-CDMA), etc.. OFDM has already been standardized for a variety of radio applications, such as: digital audio broadcasting (DAB), digital television broadcasting (DVB), wireless local area networks (WLANs), and wideband radio access. In order to further increase the system skill in counteracting interferences and selective fading, OFDM can be combined with multiple antennas (see **fig.1**). As known, for properly detecting the information bits at the receiver side, it is necessary to recover knowledge of channel state information (CSI) from the received information stream. CSI can be acquired based on the transmission of training symbols that are a priori known at the receiver; blindly, i.e., relying only on the received symbols and exploiting statistical information and/or transmitted symbol properties (like finite alphabet, constant modulus, etc.); or making joint use of training symbols and information symbols on which hard or soft decision have been taken by the receiver (decision-directed-approach).

A commonly used technique to this aim is known as the "Least Squares Estimation" (LSE). This techniques requires transmission of pilot symbols (training-based channel estimation). Optimisation of pilot symbols and their allocation in the frequency and time (i.e., over different OFDM symbols) is disclosed in the article of I. Barhumi et al., titled: "Optimum training design for MIMO in mobile wireless channels", IEEE Trans. Signal Proc., vol. 51, no. 6, pages 1615-1624, June 2003.

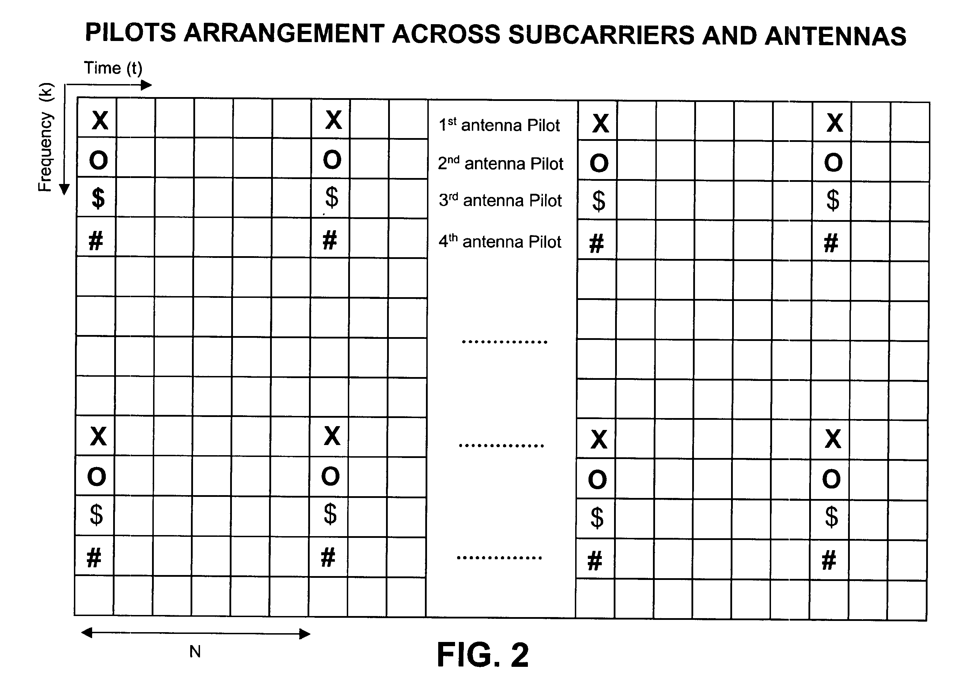

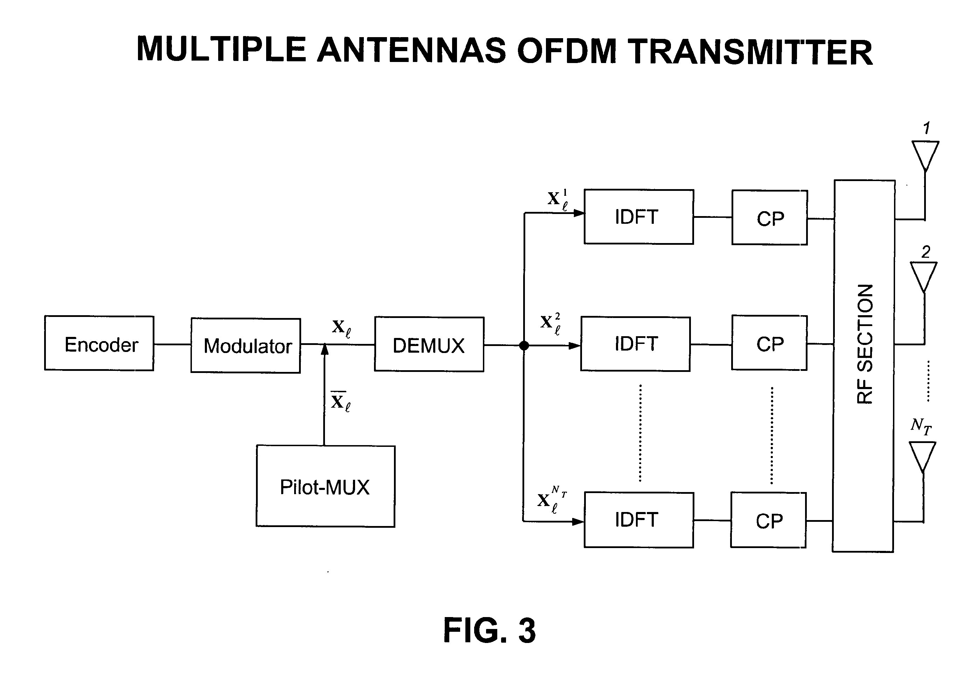

**Fig.2** shows an example of pilot arrangement across subcarriers and antennas, where the arrangement consists in using different pilot tones for different sources (4 antennas). In the example shown here each transmitting antenna transmits training symbols with fixed power over a frequency combination which is not used by other sources. The pilot tones of any combination are equally spaced along the frequencies, so that these combs not to overlap and interfere. Training data in **fig.3** are sent once every N frames at a rate adjusted with respect to the variability of the channel, but in case of fast variability, training data can be sent every OFDM symbol indeed. All subcarriers in **fig.3** not engaged with pilots are available to transmit data information. Alternatively, other arrangements are possible by choosing orthogonal signatures across the transmitting antennas as disclosed in Y.Li "Optimum training sequence for OFDM system with multiple transmit antennas" Proc. IEEE Globecom'00 Vol. 3, 27 Nov.-1 Dec. 2000, pp.1478 -1482.

The performance of the LSE technique depends in a substantially inverse manner on the ratio between the number of parameters to be estimated and the number of pilot subcarriers employed for channel estimation. The accuracy of the estimate could be in principle improved by averaging over the estimates obtained in different OFDM symbols. This approach would lead to a remarkable reduction of the background Gaussian noise on the estimate but at the same time would result in an unacceptable distortion of the channel estimate, unless the propagation environment is characterized by very slow temporal variations.

A different approach for channel estimation is based on the knowledge of the physics of the propagation channel. A method that builds on this idea for OFDM systems with a single antenna both at transmitter and receiver has been proposed in the article of B. Yang, K. B. Letaief, R. S. Cheng and Z. Cao, titled: "Channel estimation for OFDM transmission in multipath fading channels based on parametric channel modelling", IEEE Trans. Comm., vol. 49, no.3, pages 467-478, March 2001. It directly estimates the delays of the multipath and separately the corresponding fading amplitudes.

An alternative solution able to avoid the direct estimation of those parameters is disclosed in patent application EP 02425260.3-A, filed in date 23rd April 2002 in the name of SIEMENS. The channel estimation operates in digital radio communication systems with the characteristics of GSM or UMTS, although extension to OFDM is vaguely indicated but not supported with sound arguments. In all effects the described solutions concerns single carriers accessed by Time Division Multiple Access (TDMA) or even TDMA-CDMA. The accessed carriers are digitally modulated by baseband bursts having a training sequence in position of midamble. The specific scenario which the citation is devoted to, foresees multiple antennas at the receiver and single antenna at the transmitters. A modal analysis of a preliminary unconstrained estimate of the channel in the spatial and temporal domain is performed a the receiver. The modal analysis is complete when identification of the channel components with respect to space and time modes has been attained. The estimate of space and time modes reduces to the solution of a quadratic problem, thus overcoming the problems of B. Yang et al. solution in terms of computational complexity and stability. Comparing the OFDM pilot tone layout in **fig.2** with the training sequences used in TDMA or CDMA information bursts, it can be appreciated the great differences between the two approaches in channel estimation. More precisely, while in TDMA/CDMA training data are conveyed on a single modulated carrier, the OFDM training data are distributed among a plurality of subcarriers. Furthermore, while in the former case training data span a time window of several bit/chips, in the other case training data span the only symbol period. The highlighted differences together with the use of multiple transmitting antennas, unavoidably impact the channel estimation based on modal analysis.

## OBJECTS OF THE INVENTION

The main object of the present invention is that to indicate a method to perform channel estimation according to the modal analysis at the receivers of an OFDM-based radio communications system employing multiple co-located antennas both at the transmitters and the receivers.

## SUMMARY AND ADVANTAGES OF THE INVENTION

To achieve said objects the subject of the present invention is channel estimation method, as disclosed in the claims.

Introductory arguments to the present invention is the observation that in multicarrier systems (in particular with mobile terminals) non-negligible fluctuations of the fading processes are expected between consecutive OFDM symbols (or even within each symbol) whereas the above mentioned slowly-varying parameters are constant over multiple symbols.

According to the method of the invention, the channel estimation exploits the different varying rates of the multipath channel mentioned in the introduction. To this aim, following a first unconstrained channel estimation stage for the ensemble of $N_T N_R$ temporal channels and arranging these estimates in a matrix form, a modal analysis/synthesis of the channel in the doubly-space and time domain is carried out. The modal analysis identifies the slowly-varying or stationary principal components of the channel related to the slow-variations of the corresponding physical parameters of multipath propagation (e.g., angles and/or spatial correlation of fading in the doubly-spatial domain and delays in the time domain) from the observation of multiple OFDM symbols. Notice that the term doubly-spatial domain refers to the way to account for the receiving and transmitting correlation properties across the antennas in a joint manner. Along with channel modes in doubly-space and time domain, temporal correlation of the fading processes can be regarded as a slowly-varying feature of the channel. As such, it is estimated from a multi-symbol frame of received signals. The fast-varying fading processes are tracked in the temporal domain, over consecutive OFDM symbols, by means of bayesian (e.g., Wiener or Kalman) or parametric (e.g., Maximum Likelihood, Least Squares) techniques. The first stage channel estimate is pre-processed by an appropriate weighting matrixes before being fed to the modal analysis/synthesis block. The weighting matrixes can be selected according to different criteria. The choice that minimizes the Mean Square Error (MSE) on the channel estimate is a whitening filter operating jointly in the spatial domain (for spatially correlated noise) and in the spatial-temporal domain (for pilot signals correlated in time and among the transmitting antennas). The above mentioned pre-processing is balanced by a corresponding operation at the output of the modal components tracker. The channel estimate for each user obtained from the multi-symbol modal analysis/synthesis and modal component tracker is interpolated over the entire bandwidth.

In case the present invention is used in a MIMO system which allows multiuser access at the radio interface, such as PLMNs and WLANs, the available bandwidth is shared by all the active users, each of them employing in turn the multi-antenna transmitter. In order to perform equalization and decoding, the receiver has to obtain channel state information about all the users from the pilot subcarriers. Once the complete channel state is acquired, equalization is carried out by cancellation of inter-symbol interference (ISI) and/or multiuser interference (MUI).

**BRIEF DESCRIPTION OF THE DRAWINGS**

The features of the present invention which are considered to be novel are set forth with particularity in the appended claims. The invention, together with further objects and advantages thereof, may be understood with reference to the following detailed description of an embodiment thereof taken in conjunction with the accompanying drawings given for purely non-limiting explanatory purposes and wherein:

- **fig.1**, already described, shows a possible scattering scenario with multiantenna radio links;
- **fig.2**, already described, shows a possible known pilot arrangement across subcarriers and multiple transmitting antennas of an OFDM system;
- **fig.3** shows the general architecture of an OFDM transmitter with multiple antennas;
- **fig.4** shows the general architecture of an OFDM receiver with multiple antennas;
- **fig.5** shows the internal structure of a Channel Estimator block of the OFDM receiver of fig.4;
- **fig.6** shows the internal structure of a MA block (modal analyser/synthesizer) included in the Channel Estimator of fig.4.

**DETAILED DESCRIPTION OF AN EMBODIMENT OF THE INVENTION**

The non-limiting embodiment of the invention is referred to a single-user system for the only aim of not excessively complicate the already heavy notation. Nevertheless it is understood that the multiuser case is immediately derivable from the single user description. With reference to **fig**.**1** we see an OFDM transmitter including an encoder of data to be transmitted, connected to a modulator which outputs symbols $\mathbf{X}_\ell$ to the input of a block Demux. The latter also receives multiple $N_T$ pilot symbols $\bar{\mathbf{X}}_\ell$ assigned to the transmission from $N_T$ antennas from a block Pilot-Mux and demultiplexes them and data symbols over $N_T$ outputs. The $N_T$ demultiplexed symbols $\mathbf{X}_\ell^1, \mathbf{X}_\ell^2 \cdots \mathbf{X}_\ell^{N_T}$ are distributed over $N_T$ branches directed to respective blocks IDFT which perform the Inverse Discrete Fourier Transform. The $N_T$ streams at the output of IDFTs are sent to respective CP blocks for the insertion of a cyclic prefix CP and then are forwarded to an RF SECTION connected to the $N_T$ antennas. In operation, the encoder is a standard block, e.g. a convolutional encoder, that takes as input the information bit stream and adds redundancy in order to improve the performance of the link. The operation performed by the encoder is matched at the receiver by the corresponding decoder. The modulator performs the mapping of the encoded bits into generally complex symbols belonging to some constellation (such as 4-QAM). Pilot symbols are selected according to a pre-defined rule (known by the receiver). Multiplexing of data symbols (output by the modulator) and pilot symbols creates a unique stream by interleaving the two component streams. Demultiplexing on the $N_T$ substreams can be performed according to different criteria, see for instance **fig.2.** The $N_T$ substreams are divided into blocks of symbols of size $K$,

$$\left\{ \mathbf{X}_\ell^{n_T} \right\}_{n_T=1}^{N_T},$$

to which Inverse Fast Fourier Transform (IDFT) is applied. The cyclic prefix CP is then added to the tail of the resulting blocks of dimension $K$. The CP contains the last $W$ - 1 samples of the output of the IDFT block. The $N_T$ transmitted blocks

$$\left\{ \mathbf{X}_\ell^{n_T} \right\}_{n_T=1}^{N_T}$$

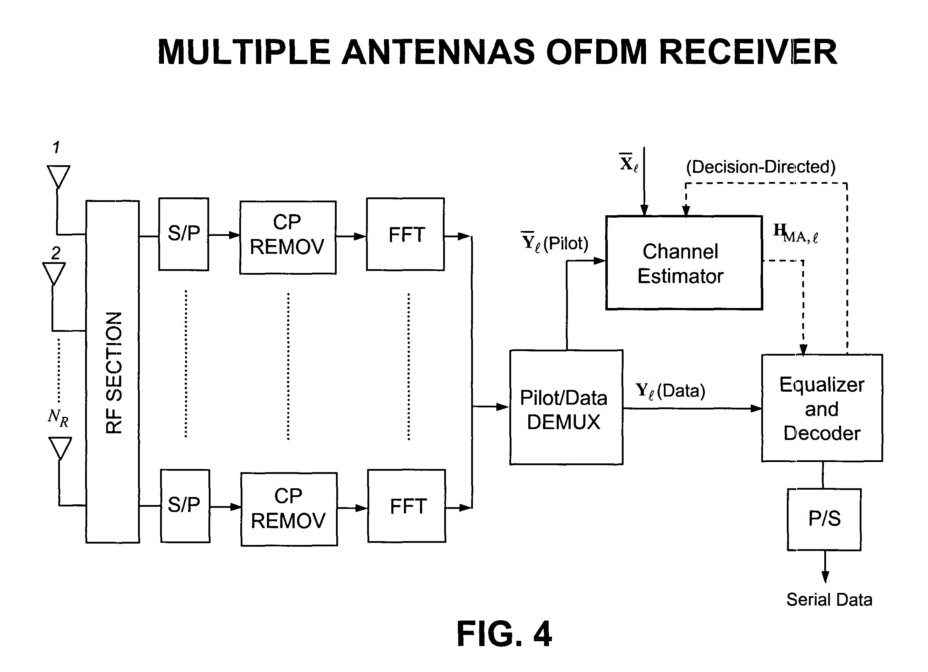

in the frequency domain generally contain both data and pilot symbols. Pilot symbols are used at the receiver for channel estimation (training-based channel estimation). In particular, a subset of the available $K$ subcarriers is employed for transmission of pilot symbols. We denote as $\bar{K}$ the total number of pilot subcarriers per OFDM symbol (among those that contain pilots) divided by $N_T$. The RF SECTION performs all the known operations for converting at IF the $N_T$ baseband streams and then to RF. The antenna power amplifiers are accurately linearized and dimensioned in such a way to be linear as in presence of the high Peak-to-Mean Envelope Power Ratio (PMEPR) characterizing OFDM.
With reference to **fig.4** the OFDM receiver includes a RF SECTION connected to $N_R = N_T$ antennas for receiving the radiofrequency signals and convers them to IF and then to baseband. The $N_R$ baseband streams reach respective S/P blocks to be parallel converted and forwarded to as many couple of cascaded blocks CP REMOV and FFT. The $N_R$ FFT blocks perform the Fast discrete Fourier Transform (FFT) and generates respective OFDM symbols complete with data and training information. The $N_R$ OFDM symbols simultaneously present at the output of FFT blocks are sent to the input of a Pilot/Data CP REMOV block which separates Pilot symbols $\bar{Y}_\ell$(*Pilot*) from data symbols $Y_\ell$ (*Data*) and forwards the first ones to a Channel Estimator and the second ones to an Equalizer and Decoder blocks. The Channel Estimator also receives the pilot symbols $\bar{X}_\ell$ stored in the receiver, so as it can calculate the noise covariance matrix and obtain the final channel estimates $H_{MA,\ell}$ according to the modal analysis/synthesis method of the present invention, that will be detailed with reference to the successive figures. Both $H_{MA,\ell}$ and $Y_\ell$ (*Data*) reaches the inputs of the Equalizer and Decoder block to be used for channel equalisation and to obtain estimates of the transmitted OFDM symbols. A final P/S block performs parallel-to-serial conversion into a recovered bitstream forwarded to the application programs. Besides the (soft of hard valued) detected symbols $Y_l$ (*Data*) are sent back to the Channel Estimator block, in case Decision-Directed (DD) channel estimate approach is accomplished. With this approach the unconstrained channel estimate can be obtained blindly by relying on the received symbols only and not pilots. The very general architecture of the OFDM multi-antenna receiver visible in **fig.4** is known, but the invention is confined into the block Channel Estimator that will be detailed in the successive figures.

In operation, the samples received from each one of the $N_R$ receiving antennas are grouped in blocks of $K + W - 1$ samples, discarded the CP (i.e., the first $W - 1$ samples) and then applied to the FFT. The resulting signal $Y^{n_R}_\ell$ [k] received over the $k$ th subcarrier ($k = 1, 2, ... ,k$) by the $n_R$ th receiving antenna in the $\ell$ th OFDM symbol can be written as:

$$Y^{n_R}_\ell[k] = \sum_{n_T=1}^{N_T} H^{n_R,n_T}_\ell[k]X^{n_T}_\ell[k] + N^{n_R}_\ell[k] \tag{1}$$

where: $H^{n_R,n_T}_\ell$ [k] is the channel gain for the link between the $n_T$ th transmitting antenna and the $n_R$ th receiving antenna over the $k$ th subcarrier, $X^{n_T}_\ell$ [k] is the symbol transmitted by the $n_T$ th transmitting antenna over the $k$ th subcarrier and $N^{n_R}_\ell$ [k] represents additive noise. Gathering the received signai over the $K$ subcarriers in the K $\times$ 1 vector $Y^{n_R}_\ell = [Y^{n_R}_\ell$ [0] $Y^{n_R}_\ell$ [1] $\cdots$ $Y^{n_R}_\ell$ [K - 1]]$^T$ it can be written that:

$$\mathbf{Y}^{n_R}_\ell = \sum_{n_T=1}^{N_T} diag(\mathbf{X}^{n_T}_\ell)\mathbf{H}^{n_R,n_T}_\ell + \mathbf{N}^{n_R}_\ell \tag{2}$$

with

$$H^{n_R,n_T}_\ell = [H^{n_R,n_T}_\ell[0]\ H^{n_R,n_T}_\ell[1]\cdots H^{n_R,n_T}_\ell[K - 1]]^T \tag{3}$$

and

$$X^{n_T}_\ell = [X^{n_T}_\ell[0]\ X^{n_T}_\ell[1]\ \cdots\ X^{n_T}_\ell[K - 1]^T. \tag{4}$$

The operator *diag*(·) denotes a diagonal matrix with entries on the main diagonal given by its argument vector. The channel $\mathbf{H}^{n_R,n_T}_\ell$ for the link between the $n_T$ th transmitting antenna and the $n_R$ th receiving antenna at the $\ell$ th OFDM symbol is obtained by applying the FFT to the corresponding $W \times 1$ channel impulse response $\mathbf{h}^{n_R,n_T}_\ell$ in the

temporal domain. Hence $\mathbf{H}_\ell^{n_R,n_T} = \mathbf{F} \mathbf{h}_\ell^{n_R,n_T}$, where $\mathbf{F}$ is the $K \times W$ DFT matrix, with $(m, n)$ entry given by

$$F_{mn} = 1 / \sqrt{K} \exp(-j \frac{2\pi}{K} mn)$$

In the following, the presentation focuses on the OFDM symbols containing pilots since the described method is a means to perform training-based channel estimation. Accordingly, the temporal index $\ell$ is assumed henceforth to run over the OFDM symbols containing pilots. The received signal over the pilot subcarriers can be collected in the $\bar{K} N_T \times 1$ vector $\overline{\mathbf{Y}}_\ell^{n_R}$ (it is assumed $\bar{K} \geq W$)

$$\overline{\mathbf{Y}}_\ell^{n_R} = \sum_{n_T=1}^{N_T} diag(\overline{\mathbf{X}}_\ell^{n_T}) \overline{\mathbf{H}}_\ell^{n_R,n_T} + \overline{\mathbf{N}}_\ell^{n_R}, \tag{5}$$

where $\overline{\mathbf{X}}_\ell^{n_T}$ is the $\bar{K} N_T \times 1$ containing the pilot symbols for the $n_T$ th antenna and $\overline{\mathbf{H}}_\ell^{n_R,n_T}$ is the $\bar{K} N_T \times 1$ gathering the corresponding channel gains. From (5), it is $\overline{\mathbf{H}}_\ell^{n_R,n_T} = \overline{\mathbf{F}} \mathbf{h}_\ell^{n_R,n_T}$ where $\overline{\mathbf{F}}$ is the $\bar{K} N_T \times W$ DFT matrix,

$$\overline{F}_{mn} = 1 / \sqrt{K} \exp(-j \frac{2\pi}{K} mn),$$

with $m$ ranging over the pilot subcarriers. It follows that model (5) can be recast as $\overline{\mathbf{Y}}_\ell^{n_R} = \mathbf{B}_\ell \mathbf{h}_\ell^{n_R} + \overline{\mathbf{N}}_\ell^{n_R}$ where:

$$\mathbf{B}_\ell = \begin{bmatrix} diag(\overline{\mathbf{X}}_\ell^1)\overline{\mathbf{F}} & diag(\overline{\mathbf{X}}_\ell^2)\overline{\mathbf{F}} & \cdots & diag(\overline{\mathbf{X}}_\ell^{N_T})\overline{\mathbf{F}} \end{bmatrix}$$
$$\mathbf{h}_\ell^{n_R} = \begin{bmatrix} (\mathbf{h}_\ell^{n_R,1})^T & (\mathbf{h}_\ell^{n_R,2})^T & \cdots & (\mathbf{h}_\ell^{n_R,N_T})^T \end{bmatrix}^T. \tag{6}$$

The signal received by the $N_R$ antennas (5) can be collected in a $N_T \bar{K} \times N_R$ matrix:

$$\overline{\mathbf{Y}}_\ell = \begin{bmatrix} \overline{\mathbf{Y}}_\ell^1 & \overline{\mathbf{Y}}_\ell^2 & \cdots & \overline{\mathbf{Y}}_\ell^{N_R} \end{bmatrix} = \mathbf{B}_\ell \mathbf{h}_\ell + \overline{\mathbf{N}}_\ell, \tag{7}$$

with the $N_T W \times N_R$ matrix $\mathbf{h}_\ell$ defined as

$$\mathbf{h}_\ell = \begin{bmatrix} \mathbf{h}_\ell^1 & \mathbf{h}_\ell^2 & \cdots & \mathbf{h}_\ell^{N_R} \end{bmatrix} \tag{8}$$

and

$$\overline{\mathbf{N}}_\ell = \begin{bmatrix} \overline{\mathbf{N}}_\ell^1 & \overline{\mathbf{N}}_\ell^2 & \cdots & \overline{\mathbf{N}}_\ell^{N_R} \end{bmatrix}$$

The Equalizer and Decoder block carries out the following action:

• tracks in the temporal domain, over consecutive OFDM symbols, the fast-varying fading processes for the aim of equalizing the amplitude of the received symbols. As previously said, this task is performed by means of bayesian (e.g., Wiener or Kalman) or parametric (e.g., Maximum Likelihood, Least Squares) techniques.

- Detects the transmitted symbols starting from the equalized signal and the knowledge of the modulation alphabet. The simplest schema of data detector is a filter matched to the estimate $\mathbf{H}_{MA,l}$, followed by a data decorrelator of known type. The reduced dimension of $\mathbf{H}_{MA,l}$ strongly simplify data detection and improve the performance of the receiver.

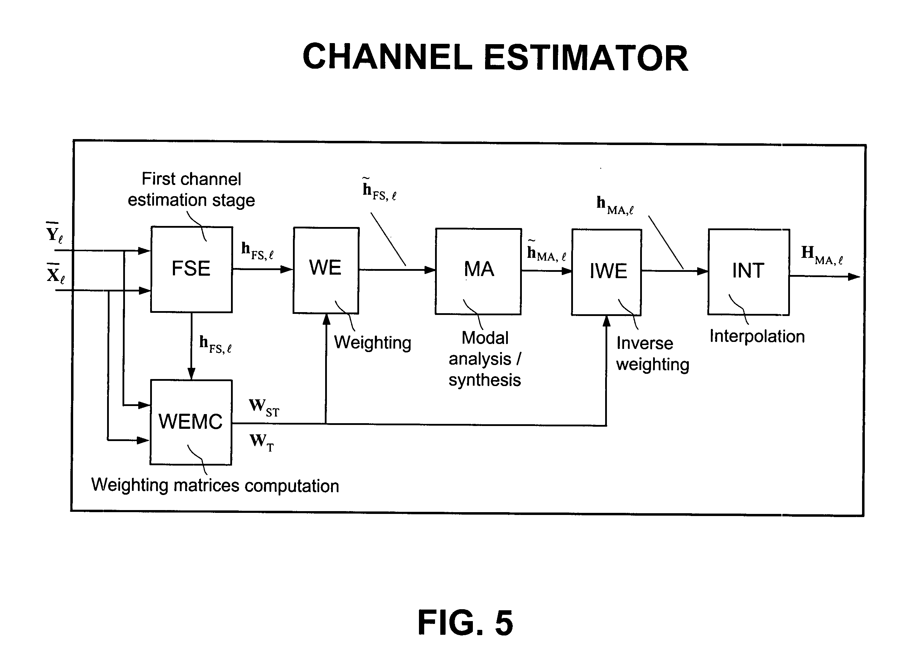

With reference to **fig.5,** we see that the CHANNEL ESTIMATOR block includes the cascade of the following blocks: FSE, SW, MA, IWE, and INT; another block named WEMC is not included in the cascade. FSE block at the top of the cascade receives symbols $\bar{\mathbf{Y}}_\ell$ and stored pilots $\bar{\mathbf{X}}_\ell$ and obtains in correspondence an unconstrained FSE estimate matrix $\mathbf{h}_{FS,\ell}$. This is performed in known way. Symbols $\bar{\mathbf{Y}}_\ell$ and stored pilots $\bar{\mathbf{X}}_\ell$ together with $\mathbf{h}_{FS,\ell}$ reach the input of WEMC which computes two weighting matrices $\mathbf{W}_S$ and $\mathbf{W}_{ST}$, respectively, to be forwarded to the WE and IWE blocks. Block WE is weighting the estimating matrix $\mathbf{h}_{FS,\ell}$ for obtaining a matrix $\tilde{\mathbf{h}}_{FS,l}$. The weighted estimate $\tilde{\mathbf{h}}_{FS,l}$ reaches the input of the MA blocks which performs modal analysis to detect doubly-spatial and temporal subspaces, at first, and then synthesizing a refined channel estimate $\tilde{\mathbf{h}}_{MA,\ell}$ by projecting the weighted estimate $\tilde{\mathbf{h}}_{FS,l}$ onto the two subspaces. The structured estimate $\tilde{\mathbf{h}}_{MA,l}$ is inverse weighted by the IWE block, obtaining at the output a structured matrix $\mathbf{h}_{MA,\ell}$. Lastly, matrix $\mathbf{h}_{MA,\ell}$ is interpolated over the entire bandwidth by the interpolation block INT obtaining the final channel estimate $\mathbf{H}_{MA,l}$ used by the Equalizer and Decoder block.

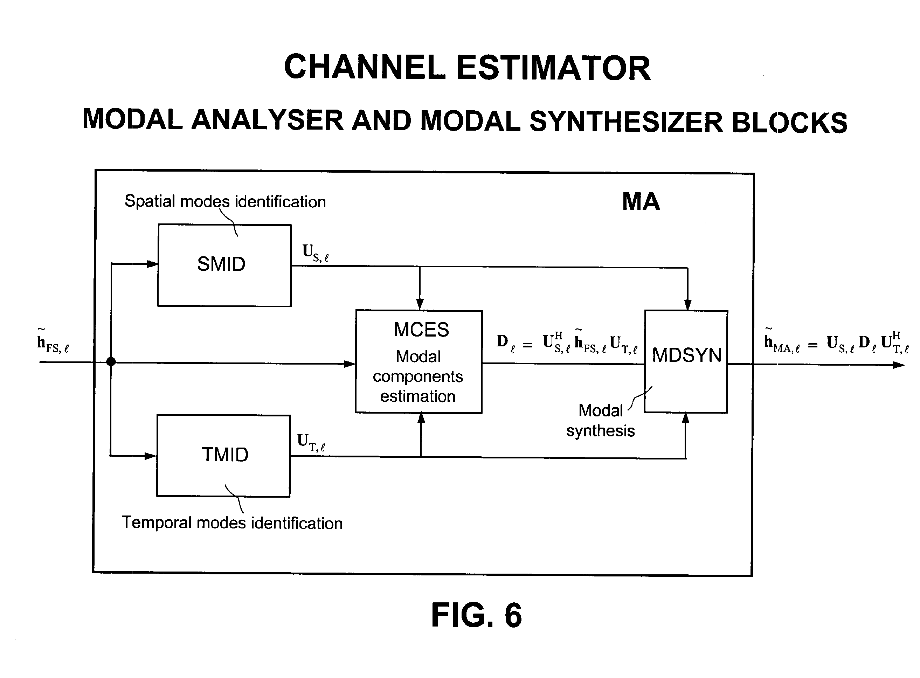

With reference to **fig.6,** block MA of the preceding figure is further detailed. Inside block MA are visible four functional blocks, named: SMID, TMID MCES, and MDSYN. The first two blocks SMID and TMID perform the identification of Doubly Spatial and Temporal modes, respectively. Doubly Spatial analysis herein refers to the modal analysis carried out for a number of transmitting antennas $N_T \geq 1$ and a number of receiving antennas $N_R \geq 1$. The SMID and TMID blocks receive at the input the weighted estimate $\tilde{\mathbf{h}}_{FS,l}$ and obtain at the respective outputs two matrices $\mathbf{U}_{S,\ell}$ and $\mathbf{U}_{T,\ell}$ relevant to doubly spatial modes and temporal modes. These matrices are sent to the other two blocks MCES and MDSYN. The first one further receives the estimated matrix $\tilde{\mathbf{h}}_{FS,l}$ and calculates a matrix $\mathbf{D}_\ell$, according to the expression reported in the figure, including the spatial and temporal modal components of the channel. Matrix $\mathbf{D}_\ell$ is forwarded to block MDSYNT which synthesises the structured matrix $\tilde{\mathbf{h}}_{MA,l}$ according to the expression reported in the figure.

The operation of CHANNEL ESTIMATOR block depicted in **figures 5** and **6** is described with particular care taken in the representation of matrices and vectors involved with the various blocks. As mentioned in the introduction, the propagation channel $\mathbf{h}_\ell^{n_R, n_T}$ with $n_R$ = 1, 2,..., $N_R$ and $n_T$ = 1, 2,..., $N_T$ is characterized by multiple paths. Each of them is described by slowly varying features (angles of departure, angles of arrival and delays) and fast varying features (fading amplitudes). In the estimation of channel $\mathbf{h}_\ell^{n_R, n_T}$ between the $N_T$ transmitting antennas and the $N_R$ receiving antennas, great importance assumes the modal analysis/synthesis (MA) of the so complicated channel. The description follows the sequential steps of the channel estimation method according to the present invention. The following main steps are included:

**1.** Full-dimensional channel estimation (unconstrained);
**2.** Weighting;
**3.** Modal analysis;
**4.** Modal Synthesis;
**5.** Inverse weighting;
**6.** Interpolation.

**Step 1 - Full-dimensional channel estimation.**

The $N_T W \times N_R$ channel estimate:

$$\mathbf{h}_{FS,\ell} = \begin{bmatrix} \mathbf{h}_{FS,\ell}^{1,1} & \mathbf{h}_{FS,\ell}^{2,1} & \cdots & \mathbf{h}_{FS,\ell}^{N_R,1} \\ \mathbf{h}_{FS,\ell}^{1,2} & \mathbf{h}_{FS,\ell}^{2,2} & \cdots & \mathbf{h}_{FS,\ell}^{N_R,2} \\ \vdots & \vdots & \vdots & \vdots \\ \mathbf{h}_{FS,\ell}^{1,N_T} & \mathbf{h}_{FS,\ell}^{2,N_T} & \cdots & \mathbf{h}_{FS,\ell}^{N_R,N_T} \end{bmatrix} \qquad (9)$$

is obtained from the first stage estimator. Each W × 1 component:

$$\mathbf{h}_{FS,\ell}^{n_R,n_T} = \begin{bmatrix} h_{FS,\ell}^{n_R,n_T}[0] & h_{FS,\ell}^{n_R,n_T}[1] & \cdots & h_{FS,\ell}^{n_R,n_T}[W-1] \end{bmatrix}^T \tag{10}$$

of the ensemble matrix $\mathbf{h}_{FS,\ell}$ represents the estimate for the channel over the link between the $n_T$th transmitting antenna and the $n_R$ th receiving antenna. For $\bar{K} \geq W + \frac{N_R}{N_T}$, the spatial noise covariance matrix can be estimated as well by:

$$\mathbf{Q}_{FS,\ell} = \frac{1}{\bar{K}} \frac{1-\mu}{1-\mu^{\ell+1}} \sum_{k=1}^{\ell} \mu^{\ell-k} \left( \bar{\mathbf{Y}}_\ell - \mathbf{B}_\ell \mathbf{h}_{FS,\ell} \right)^T \left( \bar{\mathbf{Y}}_\ell - \mathbf{B}_\ell \mathbf{h}_{FS,\ell} \right)^* \tag{11}$$

where $0 < \mu < 1$ is an exponential forgetting factor and * is the complex conjugate.

- The first stage estimator can be the conventional least square (LS) estimate

$$h_{FS,\ell} = B_\ell^+ \bar{Y}_\ell \tag{12}$$

  where $\mathbf{B}_\ell^+$ denotes the $(\bar{K}N_T \times \bar{K}N_T)$ pseudo-inverse of $\mathbf{B}_\ell$.

- In receivers with iterative equalization and decoding, the first stage estimate $\mathbf{h}_{FS,\ell}$ can be obtained by exploiting both the pilot symbols and the (soft or hard valued) data symbols fedback by the decoder.

**Step 2 - Weighting**

The $N_T W \times N_T W$ spatial-temporal ($\boldsymbol{W}_{ST,\ell}$) and the $N_R \times N_R$ spatial ($\mathbf{W}_{S,\ell}$) weighting matrices are computed and applied to the first-stage estimate $\mathbf{h}_{FS,\ell}$ as:

$$\bar{\mathbf{h}}_{FS,\ell} = \mathbf{W}_{ST,\ell} \mathbf{h}_{FS,\ell} \mathbf{W}_{S,\ell} = \begin{bmatrix} \bar{\mathbf{h}}_{FS,\ell}^{1,1} & \bar{\mathbf{h}}_{FS,\ell}^{2,1} & \cdots & \bar{\mathbf{h}}_{FS,\ell}^{N_R,1} \\ \bar{\mathbf{h}}_{FS,\ell}^{1,2} & \bar{\mathbf{h}}_{FS,\ell}^{2,2} & \cdots & \bar{\mathbf{h}}_{FS,\ell}^{N_R,2} \\ \vdots & \vdots & \vdots & \vdots \\ \bar{\mathbf{h}}_{FS,\ell}^{1,N_T} & \bar{\mathbf{h}}_{FS,\ell}^{2,N_T} & \cdots & \bar{\mathbf{h}}_{FS,\ell}^{N_R,N_T} \end{bmatrix}. \tag{13}$$

The W × 1 vector

$$\bar{\mathbf{h}}_{FS,\ell}^{n_R,n_T} = \begin{bmatrix} \bar{h}_{FS,\ell}^{n_R,n_T}[0] & \bar{h}_{FS,\ell}^{n_R,n_T}[1] & \cdots & \bar{h}_{FS,\ell}^{n_R,n_T}[W-1] \end{bmatrix}^T \tag{14}$$

denotes the estimate $\mathbf{h}_{FS,\ell}^{n_R,n_T}$ after the weighting processing. The weighting is performed to account for the spatial/temporal noise correlation and the non-orthogonality of the pilot sequences. After weighting, the elements of $\{\bar{\mathbf{h}}_{FS,\ell}^{n_R,n_T}\}$ for $n_R = 1,,N_R$ and $n_T = 1,,N_T$ are then arranged into the $N_T N_R \times W$ doubly-spatial-temporal matrix $\bar{\mathbf{h}}_{rs,\ell}$:

$$\tilde{\mathbf{h}}_{FS,\ell} = \begin{bmatrix} (\overline{\mathbf{h}}_{FS,\ell}^{1,1})^T \\ (\overline{\mathbf{h}}_{FS,\ell}^{2,1})^T \\ \vdots \\ (\overline{\mathbf{h}}_{FS,\ell}^{N_R,1})^T \\ (\overline{\mathbf{h}}_{FS,\ell}^{1,2})^T \\ (\overline{\mathbf{h}}_{FS,\ell}^{2,2})^T \\ \vdots \\ (\overline{\mathbf{h}}_{FS,\ell}^{N_R,2})^T \\ \vdots \\ (\overline{\mathbf{h}}_{FS,\ell}^{1,N_T})^T \\ (\overline{\mathbf{h}}_{FS,\ell}^{2,N_T})^T \\ \vdots \\ (\overline{\mathbf{h}}_{FS,\ell}^{N_R,N_T})^T \end{bmatrix} = \begin{bmatrix} \overline{h}_{FS,\ell}^{1,1}[0] & \overline{h}_{FS,\ell}^{1,1}[1] & \cdots & \overline{h}_{FS,\ell}^{1,1}[W-1] \\ \overline{h}_{FS,\ell}^{2,1}[0] & \overline{h}_{FS,\ell}^{2,1}[1] & \cdots & \overline{h}_{FS,\ell}^{2,1}[W-1] \\ \vdots & \vdots & \vdots & \vdots \\ \overline{h}_{FS,\ell}^{N_R,1}[0] & \overline{h}_{FS,\ell}^{N_R,1}[1] & \cdots & \overline{h}_{FS,\ell}^{N_R,1}[W-1] \\ \overline{h}_{FS,\ell}^{1,2}[0] & \overline{h}_{FS,\ell}^{1,2}[1] & \cdots & \overline{h}_{FS,\ell}^{1,2}[W-1] \\ \overline{h}_{FS,\ell}^{2,2}[0] & \overline{h}_{FS,\ell}^{2,2}[1] & \cdots & \overline{h}_{FS,\ell}^{2,2}[W-1] \\ \vdots & \vdots & \vdots & \vdots \\ \overline{h}_{FS,\ell}^{N_R,2}[0] & \overline{h}_{FS,\ell}^{N_R,2}[1] & \cdots & \overline{h}_{FS,\ell}^{N_R,2}[W-1] \\ \vdots & \vdots & \vdots & \vdots \\ \overline{h}_{FS,\ell}^{1,N_T}[0] & \overline{h}_{FS,\ell}^{1,N_T}[1] & \cdots & \overline{h}_{FS,\ell}^{1,N_T}[W-1] \\ \overline{h}_{FS,\ell}^{2,N_T}[0] & \overline{h}_{FS,\ell}^{2,N_T}[1] & \cdots & \overline{h}_{FS,\ell}^{2,N_T}[W-1] \\ \vdots & \vdots & \vdots & \vdots \\ \overline{h}_{FS,\ell}^{N_R,N_T}[0] & \overline{h}_{FS,\ell}^{N_R,N_T}[1] & \cdots & \overline{h}_{FS,\ell}^{N_R,N_T}[W-1] \end{bmatrix}. \tag{15}$$

to be fed to the modal analysis/synthesis block.

- The weighting matrices can be possibly chosen so as to whiten the error of the first estimate $\mathbf{h}_{FS,\ell}$ ; for example:

$$\text{Cov}[\text{vec}(\overline{\mathbf{h}}_{FS,\ell})] = \mathbf{I}_{N_T N_R W}, \tag{16}$$

where $\text{vec}[\overline{\mathbf{h}}_{FS,\ell}]$ is the $N_T N_R W \times 1$ vector obtained by stacking the columns of the matrix $\overline{\mathbf{h}}_{FS,\ell}$:

$$\text{vec}[\overline{\mathbf{h}}_{FS,\ell}] = \begin{bmatrix} \overline{\mathbf{h}}_{FS,\ell}^{1,1} \\ \overline{\mathbf{h}}_{FS,\ell}^{1,2} \\ \vdots \\ \overline{\mathbf{h}}_{FS,\ell}^{1,N_T} \\ \overline{\mathbf{h}}_{FS,\ell}^{2,1} \\ \overline{\mathbf{h}}_{FS,\ell}^{2,2} \\ \vdots \\ \overline{\mathbf{h}}_{FS,\ell}^{2,N_T} \\ \vdots \\ \overline{\mathbf{h}}_{FS,\ell}^{N_R,1} \\ \overline{\mathbf{h}}_{FS,\ell}^{N_R,2} \\ \vdots \\ \overline{\mathbf{h}}_{FS,\ell}^{N_R,N_T} \end{bmatrix}, \tag{17}$$

the $N_T N_R W \times N_T N_R W$ matrix $\text{Cov}[\mathbf{x}] = E[(\mathbf{x} - E[\mathbf{x}])(\mathbf{x} - E[\mathbf{x}])^H]$ is the covariance of the vector $\mathbf{x} = \text{vec}[\overline{\mathbf{h}}_{FS,\ell}]$ ; and $E[\cdot]$ means statistical expectation. Whitening the error of the first estimate $\mathbf{h}_{FS,\ell}$ means making the various contributions to the error reciprocally uncorrelated so as they resemble Additive White Gaussian Noise (AWGN).

- The matrix $\mathbf{W}_{S,\ell}$ that fulfil (16) is evaluated based of the noise spatial covariance, that is estimated as in (11).
- The spatial weighting matrix can be chosen as $\mathbf{W}_{S,\ell} = \mathbf{I}_{N_R}$ for spatially white noise.
- The weighting matrix can be chosen as $\mathbf{W}_{S,\ell} = \mathbf{Q}_{FS,\ell}^{-H/2}$ for spatially correlated noise.
- The matrix $\boldsymbol{W}_{ST,\ell}$ that fulfil (16) is evaluated based the noise temporal covariance and the pilot sequences correlation $\mathbf{R}_b = \mathbf{B}_\ell^H \mathbf{B}_\ell$. The noise temporal covariance is estimated by a sample average.
- The spatial-temporal weighting matrix is set to $\boldsymbol{W}_{ST} = \mathbf{I}_{WN_T}$ for temporally white noise and orthogonal pilot sequences.
- The spatial-temporal weighting matrix can be chosen as

$$W_{ST} = (\mathbf{B}_\ell^H \mathbf{B}_\ell)^{1/2}$$

for correlated pilot sequences and temporally uncorrelated noise.
- For temporally correlated noise (or correlated noise in the frequency domain) with temporal covariance (or frequency covariance) given by the $W \times W$ (or $(\bar{K}N_T \times \bar{K}N_T)$) matrix $\mathbf{Q}_T = E[\bar{\mathbf{N}}_\ell^{n_R}(\bar{\mathbf{N}}_\ell^{n_R})^H]$ the first stage estimator can be the whitening least square (LS) estimate

$$\mathbf{h}_{FS,\ell} = \widetilde{\mathbf{B}}_\ell^+ \mathbf{Y}_\ell,$$

where

$$\widetilde{\mathbf{Y}}_\ell = \mathbf{Q}_T^{-H/2}\mathbf{Y}_\ell$$

and $\widetilde{\mathbf{B}}_\ell^+$ is the $(\bar{K}N_T \times \bar{K}N_T)$ pseudo-inverse of

$$\widetilde{\mathbf{B}}_\ell = \mathbf{Q}_T^{-H/2}\mathbf{B}_\ell.$$

The temporal whitening is

$$\mathbf{W}_{ST} = \left(\widetilde{\mathbf{B}}_\ell^H \widetilde{\mathbf{B}}_\ell\right)^{1/2}.$$

**Step 3 - Modal analysis**

The modal analysis is performed through the following operations. The $\ell$ th space-time weighted estimate $\widetilde{\mathbf{h}}_{FS,\ell}$ is first used to update the spatial and temporal correlation matrices:

$$\mathbf{R}_{S,\ell} = \frac{1-\mu_S}{1-\mu_S^{\ell+1}} \sum_{k=1}^{\ell} \mu_S^{\ell-k} \widetilde{\mathbf{h}}_{FS,k} \widetilde{\mathbf{h}}_{FS,k}^H \qquad (18)$$

$$\mathbf{R}_{T,\ell} = \frac{1-\mu_T}{1-\mu_T^{\ell+1}} \sum_{k=1}^{\ell} \mu_T^{\ell-k} \widetilde{\mathbf{h}}_{FS,k}^H \widetilde{\mathbf{h}}_{FS,k} \qquad (19)$$

where $0 < \mu_S < 1$ and $0 < \mu_T < 1$ are exponential forgetting factors. The $N_T N_R \times r_S$ doubly spatial modes $\mathbf{U}_{S,\ell}$ are then calculated as the $r_S$ leading eigenvectors of the matrix (17), with $1 \leq r_S \leq N_T N_R$. Similarly, the $W \times r_T$ temporal modes $\mathbf{U}_{T,\ell}$ are evaluated from the $r_T$ leading eigenvectors of the matrix (18), with $1 \leq r_T \leq W$. The corresponding channel modal components are given by

$$\mathbf{D}_{S,\ell} = \mathbf{U}_{S,\ell}^H \widetilde{\mathbf{h}}_{FS,\ell} \mathbf{U}_{T,\ell}.$$

where $\mathbf{D}_{S,\ell}$ is a $r_S \times r_T$ matrix. Modal analysis allows the extraction from the unconstrained weighted channel estimate $\widetilde{\mathbf{h}}_{FS,\ell}$ the only information really effective to the estimate, disregarding the useless one. The effective information is slow-varying (angles of departure, angles of arrival and delays) and result amplified by the updating process, to the detriment of fast-varying components that are cancelled. As a consequence, the matrix including the only channel modal components has reduced dimensions with respect to the matrix $\widetilde{\mathbf{h}}_{FS,\ell}$ relevant to the full-dimensional weighted channel estimate.

- The modal components $\mathbf{D}_{S,\ell}$ can be tracked over the OFDM symbols to improve the estimate performance. Standard tracking methods can be adopted, such as: Least-Mean-Square (LMS), Recursive Least-Square (RLS), or Kalman algorithm.

**Step 4 - Modal synthesis**

The weighted channel estimate $\widetilde{\mathbf{h}}_{MA,\ell}$ is obtained through the modal synthesis:

$$\widetilde{\mathbf{h}}_{MA,\ell} = \mathbf{U}_{S,\ell} \mathbf{D}_{S,\ell} \mathbf{U}_{T,\ell}^H = \begin{bmatrix} (\overline{\mathbf{h}}_{MA,\ell}^{1,1})^T \\ (\overline{\mathbf{h}}_{MA,\ell}^{2,1})^T \\ \vdots \\ (\overline{\mathbf{h}}_{MA,\ell}^{N_R,1})^T \\ (\overline{\mathbf{h}}_{MA,\ell}^{1,2})^T \\ (\overline{\mathbf{h}}_{MA,\ell}^{2,2})^T \\ \vdots \\ (\overline{\mathbf{h}}_{MA,\ell}^{N_R,2})^T \\ \vdots \\ (\overline{\mathbf{h}}_{MA,\ell}^{1,N_T})^T \\ (\overline{\mathbf{h}}_{MA,\ell}^{2,N_T})^T \\ \vdots \\ (\overline{\mathbf{h}}_{MA,\ell}^{N_R,N_T})^T \end{bmatrix} \tag{20}$$

where

$$\overline{\mathbf{h}}_{MA,\ell}^{n_R,n_T} = \begin{bmatrix} \overline{h}_{MA,\ell}^{n_R,n_T}[0] & \overline{h}_{MA,\ell}^{n_R,n_T}[1] & \cdots & \overline{h}_{MA,\ell}^{n_R,n_T}[W-1] \end{bmatrix}^T$$

is the weighted MA estimate for the channel between the $n_T$ th transmitting antenna and the $n_R$ th receiving antenna. Modal synthesis exploits the reduced-dimension modal matrix obtained in the preceding step to depress those elements of the full-dimensional weighted channel estimate matrix $\widetilde{\mathbf{h}}_{FS,\ell}$ which don't match the values associated to the real spatial and temporal spread of the signal energy along the channel. As a consequence, the MSE of the re-estimated channel matrix $\widetilde{\mathbf{h}}_{MA,\ell}$ is lower than the one of $\widetilde{\mathbf{h}}_{FS,\ell}$. Matrix $\widetilde{\mathbf{h}}_{MA,\ell}$ is a refined weighted version of the first estimate $\widetilde{\mathbf{h}}_{FS,\ell}$.

**Step 5 - Inverse weighting**

The $N_T N_R \times W$ matrix $\tilde{\mathbf{h}}_{MA,\ell}$ is rearranged into the $N_T W \times N_R$ matrix:

$$\overline{\mathbf{h}}_{MA,\ell} = \begin{bmatrix} \overline{\mathbf{h}}_{MA,\ell}^{1,1} & \overline{\mathbf{h}}_{MA,\ell}^{2,1} & \cdots & \overline{\mathbf{h}}_{MA,\ell}^{N_R,1} \\ \overline{\mathbf{h}}_{MA,\ell}^{1,2} & \overline{\mathbf{h}}_{MA,\ell}^{2,2} & \cdots & \overline{\mathbf{h}}_{MA,\ell}^{N_R,2} \\ \vdots & \vdots & \vdots & \vdots \\ \overline{\mathbf{h}}_{MA,\ell}^{1,N_T} & \overline{\mathbf{h}}_{MA,\ell}^{2,N_T} & \cdots & \overline{\mathbf{h}}_{MA,\ell}^{N_R,N_T} \end{bmatrix}. \tag{21}$$

The former weighting is cancelled from $\overline{\mathbf{h}}_{MA,\ell}$ by pre-multiplication with $\mathbf{W}_{ST,\ell}^{-1}$ and post-multiplication with $\mathbf{W}_{S,\ell}^{-1}$:

$$\mathbf{h}_{MA,\ell} = W_{ST,\ell}^{-1} \overline{\mathbf{h}}_{MA,\ell} W_{S,\ell}^{-1} \tag{22}$$

This step acts on the re-estimated channel matrix $\mathbf{h}_{MA,\ell}$ so as to restore the original correlations among the various components of the error that is exactly performed when weighting is implemented as the whitening step Matrix $\mathbf{h}_{MA,\ell}$ is a refined version of the first estimate $\mathbf{h}_{FS,\ell}$.

**Step 6 - Interpolation**

Each estimate $\mathbf{h}_{MA,\ell}^{n_T,n_R}$ is interpolated over the entire bandwidth to get the $K \times 1$ final estimate $\mathbf{H}_{MA,\ell}^{n_T,n_R}$ in the frequency domain as:

$$H_{MA,\ell}^{n_T,n_R} = Fh_{MA,\ell}^{n_T,n_R} \tag{23}$$

The overall $KN_T \times N_R$ estimate for the channel between the $N_T$ transmitting antennas and the $N_R$ receiving antennas is finally given by:

$$\mathbf{H}_{MA,\ell} = \begin{bmatrix} \mathbf{H}_{MA,\ell}^{1,1} & \mathbf{H}_{MA,\ell}^{2,1} & \cdots & \mathbf{H}_{MA,\ell}^{N_R,1} \\ \mathbf{H}_{MA,\ell}^{1,2} & \mathbf{H}_{MA,\ell}^{2,2} & \cdots & \mathbf{H}_{MA,\ell}^{N_R,2} \\ \vdots & \vdots & \vdots & \vdots \\ \mathbf{H}_{MA,\ell}^{1,N_T} & \mathbf{H}_{MA,\ell}^{2,N_T} & \cdots & \mathbf{H}_{MA,\ell}^{N_R,N_T} \end{bmatrix}. \tag{24}$$

**Claims**

1. In a digital radio communication system a method of estimating channel response at a multiple $M_R$-antenna receiver connected to more transmitting antennas sending modulated signals through a multipath time-varying channel, the method comprising the steps of:

   a) obtaining (FSE) an unconstrained channel estimate ($\overline{\mathbf{h}}_{FS,\ell}$) from the comparison between the received signals and training information stored in the receiver;
   b) spatial and temporal filtering (WE) the unconstrained channel estimate for whitening noise and interference elements;
   c) performing a modal analysis (MAE, SMID, TMID) over the whitened channel estimate ($\tilde{\mathbf{h}}_{LS,\ell}$) to identify the stationary spatial ($\mathbf{U}_{S,\ell}$) and temporal ($\mathbf{U}_{T,\ell}$) modes of the channel;

d) computing (MCES) the components ($\mathbf{D}_\ell$) of the whitened channel estimate along said spatial and/or temporal modes;

e) performing a modal synthesis (MAE, MDSYN) to derive from said components a refined whitened channel estimate ($\tilde{\mathbf{h}}_{MA,\ell}$);

f) inverse filtering (IWE) the refined channel estimate for de-whitening,

**characterised in that:**

- said unconstrained channel estimate ($\bar{\mathbf{h}}_{FS,\ell}$) is obtained upon transmitting from $N_T$ transmitting antennas co-located and cooperative at the transmitter side; and

- the modal analysis/synthesis is carried jointly in the doubly-spatial and temporal domains.

2. The channel estimating method of the preceding claim, **characterised in that** said filtering the unconstrained channel estimate ($\bar{\mathbf{h}}_{FS,\ell}$) is obtained multiplying the channel estimate in matricial form by noise and interference weighting matrices ($\mathbf{W}_S$, $\mathbf{W}_T$) operating a linear transformation towards sub-optimum estimate, including the whitening.

3. The channel estimating method of claim 2, **characterised in that** said spatial weighting is the whitening by the spatial noise covariance matrix ($\mathbf{W}_S$).

4. The channel estimating method of claim 2, **characterised in that** said spatial-temporal weighting is the whitening by the spatial-temporal correlation of the transmitted signals ($\mathbf{W}_{ST}$).

5. The channel estimating method of claim 2, **characterised in that** said spatial-temporal weighting is the whitening by the temporal correlation of the noise ($\mathbf{W}_{ST}$).

6. The channel estimating method of one of the preceding claims, **characterised in that** fast-variations into the $N_R \times N_T$ channels are estimated by tracking the corresponding modal components in the joint spatial and temporal domain.

7. The channel estimating method of one of the preceding claims, **characterised in that** said unconstrained channel estimate ($\bar{\mathbf{h}}_{FS,\ell}$) is obtained in the frequency domain by transmitting OFDM modulated pilot symbols univocally associated to the transmitting antennas, and using relevant training pilots stored in the receiver.

8. The channel estimating method of the preceding claim, **characterised in that** modal analysis and synthesis optimises the channel response in frequency domain for the ensemble of $N_R \times N_T$ channels.

9. The channel estimating method of the preceding claim, **characterised in that** said pilot OFDM symbols are either transmitted at symbol time or at multiple symbol time, according to the time-varying channel.

10. The channel estimating method of one of the preceding claims, **characterised in that** said inverse filtered channel estimate ($\bar{\mathbf{h}}_{MA,\ell}$) is interpolated over the entire bandwidth of the OFDM modulated signals.

11. The channel estimating method of claim 9, **characterised in that** the weighting accounts for the non-orthogonality of the pilot symbols used by different transmitting antennas.

12. The channel estimating method of claim 9, **characterised in that** the weighting is performed jointly in the spatial domain and in the temporal domain for temporally correlated noise and correlated pilot sequences.

13. The channel estimating method of claim 9, **characterised in that** the weighting is performed by means of a spatial correlation matrix for temporally uncorrelated noise and orthogonal pilot sequences.

14. The channel estimating method of one of the preceding claims, **characterised in that** the modal analysis is performed by estimating the channel modes from the doubly-spatial and temporal correlation matrices.

15. The channel estimating method of claim 9, **characterised in that** the modal analysis includes updating the doubly-spatial and temporal modes by exploiting the weighted estimate derived within the current OFDM symbol.

**16.** The channel estimating method of the preceding claim, **characterised in that** the updating of the doubly-spatial and temporal modes is carried out at a reduced rate compared to the OFDM symbols.

**17.** The channel estimating method of the preceding claim, **characterised in that** the modal analysis includes tracking the channel components over the OFDM symbols.

**18.** The channel estimating method of one of the the preceding claims, **characterised in that** the modal analysis/ synthesis is carried out for temporal modes only.

**19.** The channel estimating method of the preceding claim, **characterised in that** the tracking is carried out for the only temporal components over OFDM symbols.

**20.** The channel estimating method of one of the preceding claims, **characterised in that**:

- the unconstrained channel estimate collects $N_R \times N_T$ channel responses into a unique description of the channel including transmission-side-spatial-related elements, reception-side-spatial-related elements, and temporal-related elements;
- said doubly-space mode analysis and synthesis exploits $N_R \times N_T$ correlations over the same numbers of channels from the antennas.

**21.** The channel estimating method of claim 1, **characterised in that** said training information stored in the receiver correspond to already decided symbols.

# MULTIPATH SCATTERING IN RX AND TX MULTIANTENNA LINK

$N_T$   $\alpha_2^{(T)}$   $\alpha_1^{(T)}$   $\alpha_2^{(R)}$   $\alpha_1^{(R)}$   $N_R$

**FIG. 1**

EP 1 530 333 A1

# PILOTS ARRANGEMENT ACROSS SUBCARRIERS AND ANTENNAS

X — 1st antenna Pilot

O — 2nd antenna Pilot

$ — 3rd antenna Pilot

# — 4th antenna Pilot

N

## FIG. 2

# MULTIPLE ANTENNAS OFDM TRANSMITTER

**FIG. 3**

EP 1 530 333 A1

# MULTIPLE ANTENNAS OFDM RECEIVER

**FIG. 4**

EP 1 530 333 A1

# CHANNEL ESTIMATOR

**FIG. 5**

EP 1 530 333 A1

# CHANNEL ESTIMATOR

## MODAL ANALYSER AND MODAL SYNTHESIZER BLOCKS

**FIG. 6**

EP 1 530 333 A1

## EUROPEAN SEARCH REPORT

**European Patent Office**

**Application Number**

EP 03 42 5721

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | EP 1 357 714 A (SIEMENS INF & COMM NETWORKS) 29 October 2003 (2003-10-29)<br>* the whole document * | 1-21 | H04L25/02<br>H04L1/06<br>H04B7/04 |
| D,A | BARHUMI I ET AL: "Optimal training design for MIMO OFDM systems in mobile wireless channels"<br>IEEE TRANSACTIONS ON SIGNAL PROCESSING, JUNE 2003, IEEE, USA,<br>vol. 51, no. 6, June 2003 (2003-06), pages 1615-1624, XP002284029<br>USA<br>ISSN: 1053-587X<br>* abstract * | 1-21 | |
| A | JIANXUAN DU ET AL: "MIMO-OFDM channel estimation based on subspace tracking"<br>57TH IEEE SEMIANNUAL VEHICULAR TECHNOLOGY CONFERENCE. VTC 2003 (CAT. NO.03CH37431), 22 April 2003 (2003-04-22), - 25 April 2003 (2003-04-25) pages 1084-1088, XP002284030<br>PISCATAWAY, NJ, USA<br>ISBN: 0-7803-7757-5<br>* abstract * | 1-21 | TECHNICAL FIELDS SEARCHED (Int.Cl.7)<br><br>H04L<br>H04B |

The present search report has been drawn up for all claims

| Place of search | Date of completion of the search | Examiner |
|---|---|---|
| The Hague | 10 June 2004 | Koukourlis, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 03 42 5721

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2004

| Patent document cited in search report | | Publication date | Patent family member(s) | | Publication date |
|---|---|---|---|---|---|
| EP 1357714 | A | 29-10-2003 | EP | 1357714 A1 | 29-10-2003 |
| | | | CN | 1454019 A | 05-11-2003 |
| | | | US | 2004008803 A1 | 15-01-2004 |

EPO FORM P0459

For more details about this annex : see Official Journal of the European Patent Office, No. 12/82